# EUROPEAN PATENT SPECIFICATION

(11) **EP 3 798 796 B1**
(45) Date of publication and mention of the grant of the patent: **20.03.2024**
(21) Application number: 19306197.5
(22) Date of filing: 25.09.2019
(51) Int. Cl.: G06F 1/32, G06F 1/3215

(54) **LOW-CONSUMPTION ELECTRONIC DEVICE AND METHOD FOR POWERING ON AN ELECTRONIC DEVICE**
ELEKTRONISCHE VORRICHTUNG MIT NIEDRIGEM VERBRAUCH UND VERFAHREN ZUR STROMVERSORGUNG EINER ELEKTRONISCHEN VORRICHTUNG
DISPOSITIF ÉLECTRONIQUE À FAIBLE CONSOMMATION ET PROCÉDÉ DE MISE EN MARCHE D'UN DISPOSITIF ÉLECTRONIQUE

(43) Date of publication of application: 31.03.2021
(73) Proprietor: Netatmo, 92100 Boulogne Billancourt (FR)
(72) Inventor: ESNAULT, Frédéric, 78960 Voisins-le-Bretonneux (FR); CAZALIS, Romain, 78220 Viroflay (FR)
(74) Representative: Atout PI Laplace

(56) References cited:
- DE-A1-102018 204 681
- US-A1- 2014 075 226
- US-A1- 2014 149 754

## Description

### FIELD

The invention relates to the field of sensors and power saving and concerns a low-consumption electronic device equipped with a sensor. The invention also concerns a method for powering on such a low-consumption electronic device.

### BACKGROUND

An electronic device equipped with a sensor comprises a power source to supply energy to the electronic device. The sensor is able to provide a digital output to trigger an event. For example, in the case of motion detection, the digital output is defined as 0 in the idle state and as 1 if a motion is detected. In the case of a magnetic switch, the digital output is defined as 0 in the idle state and as 1 if the switch is closed (for example used to detect a proximity or a door closing). In the case of a temperature sensor, the digital output is defined as 0 when no alarm is triggered (i.e. when the measured temperature is in a predetermined temperature range) and as 1 if the measured temperature is above or below a threshold temperature previously defined). The invention will be described with a sensor being a motion infrared sensor. But the invention also concerns an electronic device with a sensor being a temperature, humidity, pressure or light sensor, or a smoke or gas detection sensor, or a rain gauge. The power source may be an electrical circuit or a battery. The invention will be described with the non-limiting example of a battery as a power source.

Such an electronic device comprises a processing digital circuit, for example a microcontroller, an FPGA (Field Programmable Gate Array) or Arduino, also fed by the same power source and configured to receive a signal from the sensor when the sensor detects a motion. The processing digital circuit, for example a microcontroller, may be connected to other electronics able to communicate with a gateway connected to the internet, or to other electronics that are not necessarily connected to a gateway, for example to trigger an action further to the motion detection. The action resulting from this may be for example turning on a light or triggering an alarm.

This type of electronic devices has the drawback that the electronic device, i.e. each component of the device (sensor, microcontroller and eventually other electronics) is always kept activated to receive any signal from the sensor, or is in a sleep mode that is also consuming energy even though less than in the awake mode, also called on mode. In other words, the microcontroller has to be in continuous listening mode. This results in a high energy consumption, i.e. high for an ultra-low-power system. Therefore, it is necessary to change the battery of the electronic device on a regular basis to ensure that it has enough energy to power the microcontroller and the other components or to power it continuously, using a power source.

US2014149754A1 presents a mechanism whereby the amount of power and processing capacity needed to process gesture input for a computing device is reduced by splitting the management of sensors, used to detect the input, among different processing components. A relatively high power processor system can monitor the sensors and determine the presence of gestures when the device is in an active state. When the device, or at least the processor system, enters a sleep mode, sensor management is transferred to a microcontroller connected to at least a portion of the sensors, such that the microcontroller can analyze the sensor data to determine the likelihood of a wake action being performed. In response to detecting a wake action, the microcontroller can contact a component such as a power management component to place the processor system in an active state, and enable the processor system to resume management of the sensors.

There is consequently a need for an electronic device equipped with a sensor with a lower energy consumption while still able to detect motion and send an appropriate signal to the microcontroller also able to operate a task as it should do. Furthermore, it should be ensured that the electronic device is properly woken up, and that the sensor is properly configured to communicate with the microcontroller.

### SUMMARY OF THE INVENTION

Accordingly there is provided an electronic device as defined in the appended independent claim 1, and a method for powering on an electronic device as defined in the appended independent claim 2. Preferred embodiments are defined in the dependent claims.

### BRIEF DESCRIPTION OF THE DRAWINGS

The accompanying drawings illustrate various non-limiting, example, innovative aspects in accordance with the present descriptions:
- Figure 1 schematically represents an electronic device with a sensor of the prior art;
- Figure 2 schematically represents another improved electronic device with a sensor of the prior art;
- Figure 3 schematically represents an embodiment of the electronic device according to the invention;
- Figures 4, 5, 6 schematically represent the main steps of the powering on of the electronic device according to the invention;
- Figures 7, 8, 9, 10, 11 schematically represent the main steps of the configuration of the sensor of the electronic device according to the invention;
- Figure 12 represents a block diagram of the steps of a method for powering on the electronic device according to the invention;
- Figure 13 illustrates a practical example of the electronic device 10 of the invention.

For the sake of clarity, the same elements have the same references in the various figures. As mentioned before, the invention is described with a motion detection sensor but may be applied to any other type of sensors configured to provide a digital output to trigger an event, such as depending on weather conditions (temperature, humidity, etc.) or environment (gas, smoke, particulate detection, etc.), or contact, that is to say with at least two states output/internal threshold mechanism.

### DETAILED DESCRIPTION

Throughout the description, the invention is described in a non-limiting manner with a microcontroller. The microcontroller is to be understood as any processing digital circuit, for example a microcontroller, an FPGA (Field Programmable Gate Array) or an evaluation board.

In the figures, the dotted lines represent the power transmission and the straight lines represent a signal transmission.

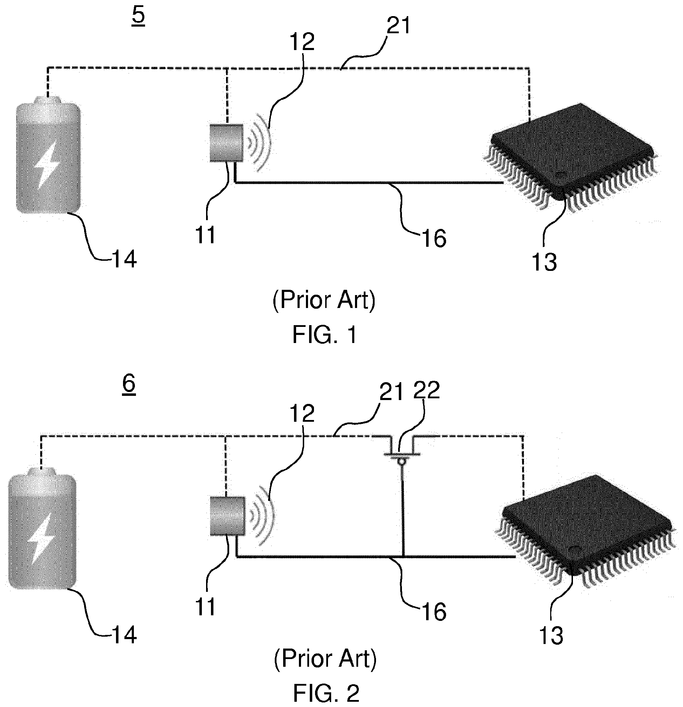

Figure 1 schematically represents an electronic device 5 with a sensor 11 of the prior art. As previously mentioned, such an electronic device 5 of the prior art comprises a microcontroller 13 fed by the same power source 14 as the sensor 11. The microcontroller 13 is configured to receive a signal 16 from the sensor 11 when the sensor 11 detects a motion (in the case of a motion detection sensor). The microcontroller 13 may be configured to further trigger an action further to the motion detection. The electronic device 5 has the drawback that the electronic device 5, i.e. each component of the electronic device 5 (sensor 11, microcontroller 13 and eventually other electronics) is always kept activated to receive any signal from the sensor. This results in a high energy consumption. Indeed, in this configuration, a small unwanted current is flowing all the time in the circuit of the electronic device 5, even if the microcontroller 13 is not being activated. Therefore, it is necessary to change the battery of the electronic device on a regular basis to ensure that it has enough energy to power the microcontroller and the other components or to power it continuously, using a power source.

Powering the sensor 11 all the time is necessary, for it to be able to detect an event. However, powering the microcontroller 13 all the time is not a must and leads to an unwanted power consumption. As already said, even if the microcontroller 13 is not being activated, it always consumes some power. Typical values are 2 to 10 microamperes (µA). This can represent a significant current for very low sensor nodes (typically consuming a few tenths of microamperes).

Figure 2 schematically represents another improved electronic device 6 with a sensor 11 of the prior art. The electronic device 6 comprises the same elements as the electronic device 5. The electronic device 6 further comprises a switch 22, for example a transistor, positioned between the power source 14 and the microcontroller 13. The sensor 11 is powered by the power source 14 all the time and is able to detect a predefined event 12 (a motion in our example). When a predefined event 12 occurs, the sensor 11 detects it and sends a signal that triggers a gate of the transistor 22 (more generally closes the switch 22), thus leading to the connection of the power source 14 to the microcontroller 13 power-rail. At this moment, the microcontroller is powered, it wakes up and can operate at least a predetermined task. Advantageously the microcontroller 13 may confirm by reading the sensor state that an event was triggered. It can be useful if the electronic device is configured to allow multiple events to wake-up the microcontroller: this allows the microcontroller 13 to know which event woke it up. The switch 22 may be of any other compatible type, for example an electrical switch, a network switch, a sensitive switch, etc. In the description, the switch 22 connects the microcontroller 13 to the power source 14 in its closed position, and disconnects the microcontroller 13 from the power source 14 in its open position.

Unfortunately the principle diagram presented in figure 2 does not work properly. Indeed, to ensure a proper waking-up of the microcontroller, the power-rail of the microcontroller needs to be powered first, then the sensor can be connected to the microcontroller input. Otherwise backdrive currents or other unwanted parasitic effects may occur. Moreover, once the microcontroller is awake (i.e. on), it needs to preserve its on state while it did not finish the predetermined task it has to perform. Finally, in case of a digital sensor with volatile memory, the sensor needs to be configured by the microcontroller in order to work. But in order to do so, the microcontroller needs to be awake by the sensor to be powered. In other words, we are faced with unsolvable problems: the sensor is fed with the power source and has to wake up the microcontroller when it detects an event, and the microcontroller, that should not be fed all the time with the power source, but only when it needs to work, should be powered first.

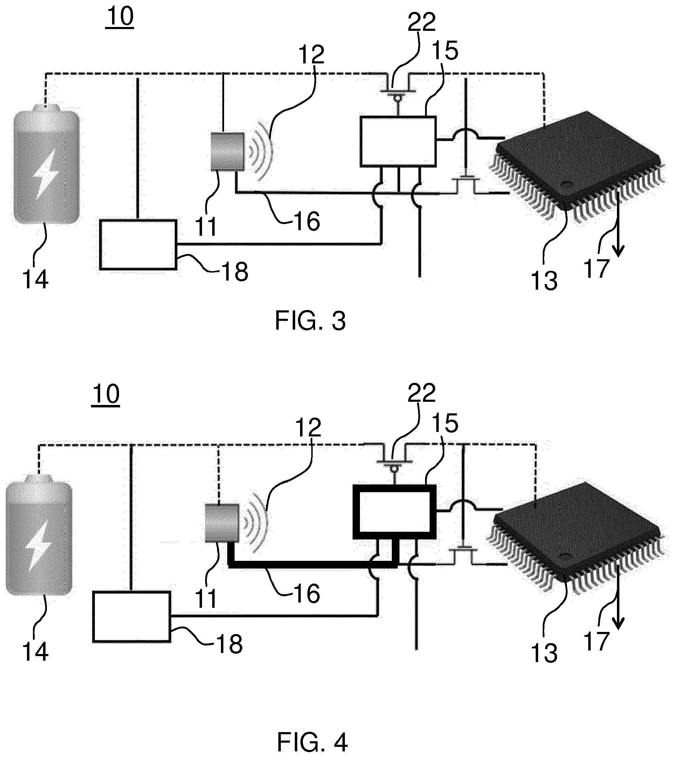

Figure 3 schematically represents an embodiment of the electronic device 10 according to the invention. The electronic device 10 of the invention comprises a sensor 11 able to detect a predefined event 12. It comprises a microcontroller 13 connected to the sensor 11, the microcontroller 13 being in an off state. It comprises a power source 14 connected to the sensor 11. According to the invention, the electronic device 10 comprises an event detection device 15 connected to the sensor 11 and configured to connect the microcontroller 13 to the power source 14 when the sensor 11 detects the predefined event 12, so as to switch the microcontroller 13 from the off state to an awake state or on state, wherein the microcontroller 13 is configured to read in the on state a signal 16 from the sensor 11 when the sensor 11 detects the predefined event 12 and the microcontroller 13 is configured to operate at least a predetermined task 17 when it reads the signal 16 from the sensor 11.

As mentioned before, the invention is described with a sensor being a motion infrared sensor. But the invention also concerns an electronic device with a sensor being a temperature, humidity, pressure or light sensor, or a smoke or gas detection sensor, or a rain gauge. The power source may be an electrical circuit or a battery. The invention further finds application in the field of smart home applications, as well as loT (Internet of Things) applications.

For example, a home environment has more and more devices that may be controlled electrically. This is the case of lamps, heating and cooling equipments, windows, shutters or blinds, cooking and food preservation equipments, cleaning devices, entertainment devices, security systems, etc. These devices may be controlled from one or more remote controls, either in Line of Sight (LOS) of the device to be controlled, or non-LOS. Different types of remote controls may be used: optical (visible or Infrared), radiofrequency (RF), etc. A network in the home, for instance a Radio Frequency (RF) network, may be established to be able to share data between various devices having a same function, in a coordinated manner, i.e. setting the temperature control points of a central heater and of individual heaters connected to the central heater. The RF network may comply with the Wi-Fi, the Bluetooth^{™} or the Zigbee standard (IEEE 802.15.4). Also, the devices installed in the home and connected to a network may be controlled from outside the home, using for instance an internet connection to a home or room gateway. The devices may then be monitored and controlled from anywhere in the world using an application running on a desktop, a laptop, a tablet or a smart phone or the like. The same occurs in office and industrial or commercial buildings, with various type of equipment. The electronic device according to the invention may find an application in such an environment and the predetermined task of the microcontroller may be operated within a frame of a smart home and/or loT applications. These use cases should not be construed as limitative but only illustrative of the field of application of the invention.

In the pending application, the off state is to be understood as the state in which the microcontroller is when it is not at all connected to the power source. When connected to the power source, the sensor can also be in a sleep state when not detecting an event in order to reduce its consumption.

If the electronic device according to the invention comprises a single power source, the single power source is configured to provide power to all the elements of the electronic device 10: sensor, event detection device and microcontroller.

The predetermined task 17 may be, for example and in a non-exhaustive list, sending an RF frame configured to turn on a light, preferably for a predetermined duration, to trigger an alarm, and/or sending a signal to a device configured to receive and process the signal. It can be any other action depending on the use case of the electronic device.

Advantageously, the event detection device 15 may be configured to disconnect the microcontroller 13 from the power source 14 after the operating of the at least a predetermined task 17. For example, once the sensor 11 detects a motion, it sends a signal to the event detection device 15 that connects the microcontroller 13 to the power source 14. Following this, the microcontroller 13 switches from the off state to its on state. The microcontroller 13 reads in the on state a signal 16 from the sensor 11 and the microcontroller 13 operates the predetermined task 17 of turning on the microprocessor. Once the microprocessor is turned on, the predetermined task 17 is realized, the microcontroller 13 has performed the action it had to do. The event detection device 15 disconnects the microcontroller 13 from the power source 14 (for example by opening the switch 22). The microcontroller goes back from its on state to its off state. This embodiment ensures a high saving of energy consumption since the microcontroller is only powered when it needs to perform a task.

Advantageously, the electronic device 10 comprises a circuitry change device 18 connected to the event detection device 15 and configured to detect a change within the electronic device 10, send an initiating signal 19 to the event detection device 15, the event detection device 15 being configured to connect the microcontroller 13 to the power source 14, so as to switch the microcontroller 13 from the off state to the on state, and the microcontroller 13 being configured to send a configuration signal to the sensor 11, so as to pair the sensor 11 with the microcontroller 13. This allows a proper communication between the microcontroller and the sensor. The microcontroller thus knows that the signal comes from the sensor and knows which action(s) is/are to be associated with the signal.

Figures 4, 5, 6 schematically represent the main steps of the powering on of the electronic device 10 according to the invention. The method for powering on an electronic device 10, comprising a sensor 11 able to detect a predefined event 12 and send a signal 16 when the sensor 11 detects the predefined event 12, a microcontroller 13 connected to the sensor 11, the microcontroller 13 being in an off state, a power source 14 connected to the sensor 11, an event detection device 15 connected to the sensor 11, comprises the steps of detecting (step 101) the predefined event 12 by the sensor 11, connecting (step 102) the microcontroller 13 to the power source 14 by the event detection device 15, so as to switch the microcontroller 13 from the off state to an on state, reading (step 103) the signal 16 from the sensor 11 by the microcontroller 13, and operating (step 104) at least a predetermined task 17 by the microcontroller 13.

The invention is based on the fact that the sensor 11 detects a predefined event, sends a signal to the event detection device 15 that closes the switch 22 thus resulting in the connection of the microcontroller 13 with its power source 14. Following this, the microcontroller leaves its off state and becomes awake, i.e. in its on state, and can read the signal from the sensor 11 to perform one or more tasks 17 it has to initiate.

The step 101 of detecting the predefined event 12 by the sensor is schematically represented in Figure 4 with bold straight lines. The sensor 11 detects the predefined event 12, for example a motion within its vicinity. This enables the event detection circuit 15.

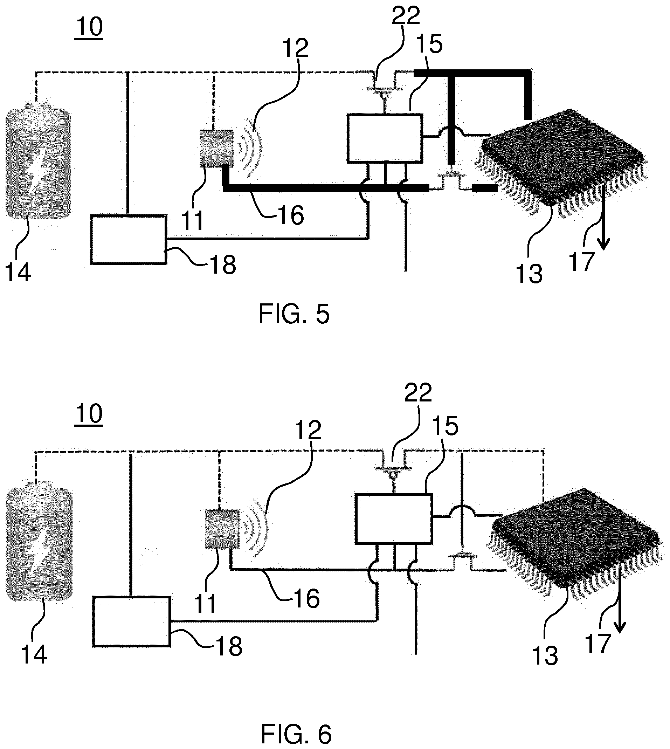

Afterwards and as schematically represented in Figure 5, the step 102 of connecting the microcontroller 13 to the power source 14 by the event detection device 15 occurs. It enables to switch the microcontroller 13 from the off state to an on state. During the step 102, the switch 22 that was previously open closes, thus resulting in the connection of the microcontroller 13 to the power source 14. This connection powers the microcontroller 13 and enables the microcontroller 13 to sensor link. The microcontroller 13 then maintains the event detection device 15 active, reads the sensor state (step 103) and detects that it (the microcontroller 13) was powered by the sensor 11. Finally the microcontroller 13 does what it has to do (step 104), i.e. the predetermined task 17 (for example send an RF frame to turn on a light further to the motion detection by the sensor 11).

The method of the invention may further comprise a step 105 of disconnecting the microcontroller 13 from the power source 14 by the event detection device 15 after the step 104 of operating the at least a predetermined task 17. Once the predetermined task 17 is performed, the microcontroller 13 may be configured to release the event detection device 15 to go back to its initial state. In other words, the microcontroller is in its off state again, and the event detection device 15 is ready to receive a signal from the sensor 11. In other words, and as represented in Figure 6, the microprocessor 13 releases the event detection device 15 to go back to the initial state, the sensor 11 being now configured so that the microcontroller and the sensor can communicate together.

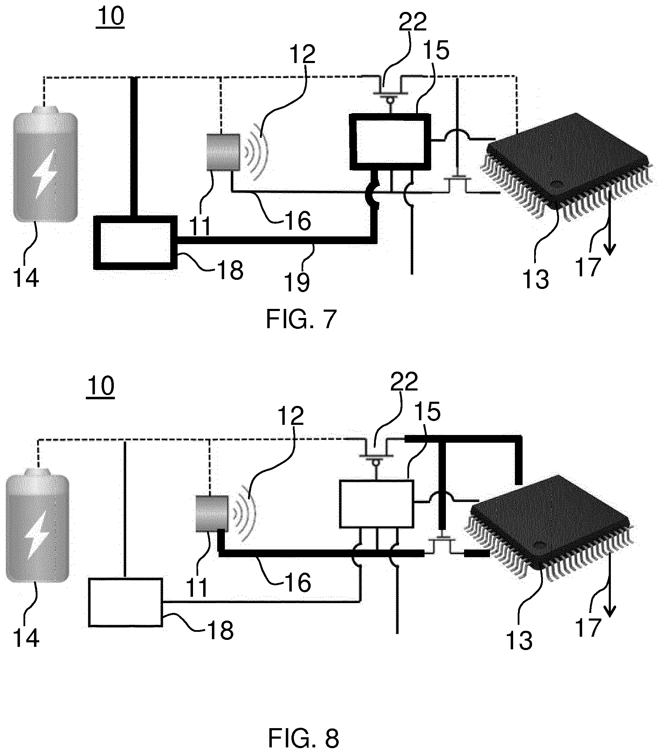

Figures 7, 8, 9, 10, 11 schematically represent the main steps of the configuration of the sensor of the electronic device according to the invention. The method of the invention may comprise, before the step 101 of detecting the predefined event 12 by the sensor 11, a step 100 of configuring the sensor 11. This step allows a proper communication between the microcontroller and the sensor.

This step 100 is realized with an electronic device 10 further comprising a circuitry change device 18 connected to the event detection device 15 and configured to detect a change within the electronic device 10. The change within the electronic device 10 may be a power source 14 change and/or a sensor 11 change and/or a microcontroller 13 change.

The step 100 of configuring the sensor 11 comprises the step 110 of detecting a change within the electronic device 10 by the circuitry change device 18, the step 111 of sending 111 an initiating signal 19 to the event detection device 15 from the circuitry change device 18, a step 112 of connecting the microcontroller 13 to the power source 14 by the event detection device 15, so as to switch the microcontroller 13 from the off state to the on state, and the step 113 of sending a configuration signal from the microcontroller 13 to the sensor 11, so as to pair the sensor 11 with the microcontroller 13.

Starting now with Figure 7, when battery is changed, the circuitry change device 18 detects this change within the electronic device 10. Further to this change detection and through the connection between the circuitry change device 18 and the event detection device 15, the circuitry change device sends an initiating signal 19 to the event detection device 15. The event detection device 15 then connects the microcontroller 13 to the power source 14, so as to switch the microcontroller 13 from the off state to the on state. Because the microcontroller 13 is now powered (as schematically depicted in Figure 8), the microcontroller 13 sends a configuration signal to the sensor 11, so as to pair the sensor 11 with the microcontroller 13. This enables the connection between the microcontroller 13 and the sensor 11.

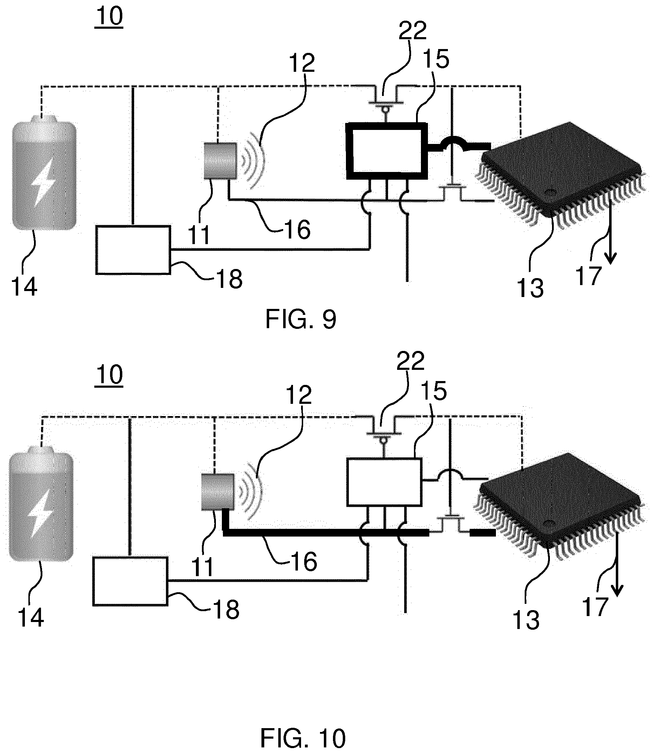

The microcontroller 13 then also enables the event detection device 15 to make sure it is kept awake, i.e. in its on state, while it has some work to do (as schematically depicted in Figure 9). At this stage, the microcontroller 13 configures the sensor 11 (as schematically depicted in Figure 10).

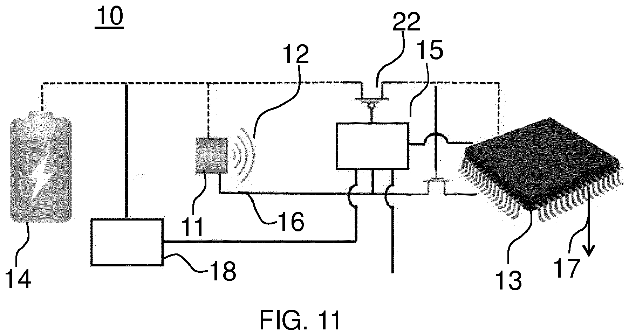

Finally and as represented in Figure 11, the sensor 11 is configured. In the previous example, the motion sensor 11 is configured to detect motion within a given range. The sensor 11 is now able to power on the microcontroller 13 and then the microcontroller releases the event detection device 15 and is unpowered (i.e. back to its initial state with a configured sensor). After the sensor configuration, the microcontroller 13 switches to its off state, and the electronic device 10, except the sensor 11, is unpowered.

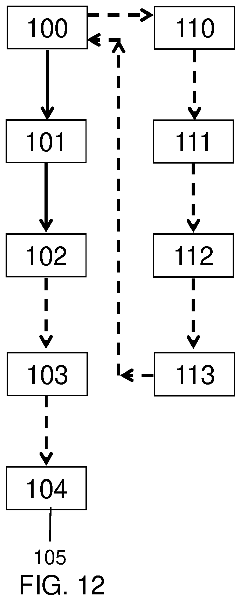

Figure 12 represents a block diagram of the steps of a method for powering on the electronic device according to the invention as previously described.

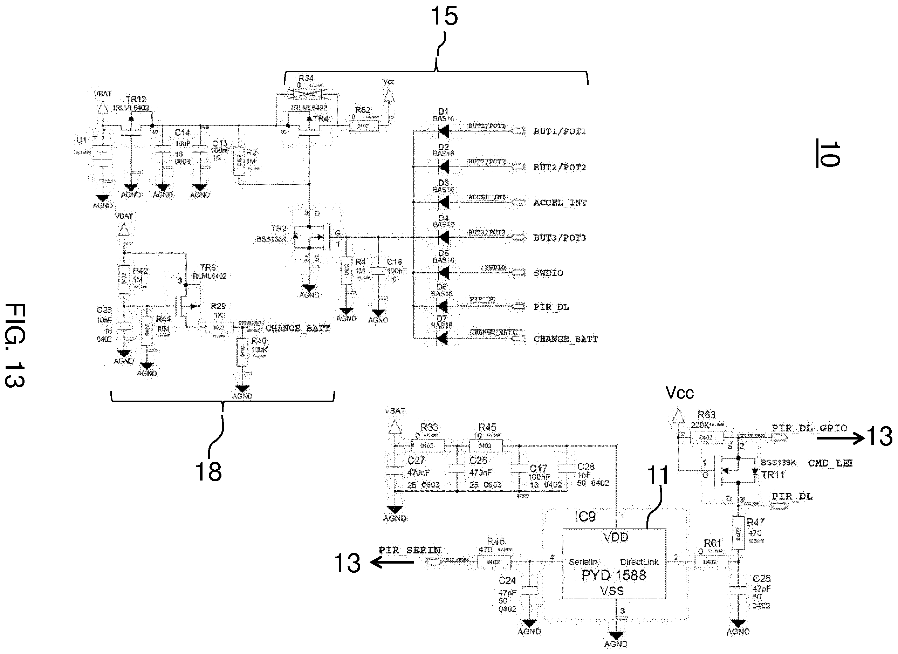

Figure 13 illustrates a practical example of the electronic device 10 of the invention. On the left hand side of Figure 13, the battery (i.e. power source) and power management is represented. On the right hand side of Figure 13, the sensor 11 and its connections to other elements of the electronic device 10 are represented.

IC9 is the sensor 11. PIR_DL_GPIO and PIR_SERIN signals are directly connected to the microcontroller 13. In its off state, all input signals of the wake-up circuit are at level 0, thus Vcc=0 (disconnected from Vbatt). When the sensor 11 (IC9) detects a motion, the sensor 11 pulls PIR_DL line from 0 to 1. This enables the wake-up circuit made of TR2 and surrounding components. When this wake-up circuit is enabled, this connects Vcc to Vbatt through TR4 and thus the microcontroller 13 becomes alive and TR11 forwards PIR_DL signal to the microcontroller 13 (mandatory to avoid backdrive, as described above).

Then, the microcontroller 13 uses one signal of the wake-up circuit (in the practical example represented in Figure 13 this signal is SWDIO signal) to maintain TR2 and TR4 in the desired state while the microcontroller 13 has to work (because PIR_DL signal has to go back to 0 after a while). When the microcontroller 13 finishes everything it has to do after a motion detection (in the previous example sending an RF frame to turn on a light for a given time and eventually do some other things), it releases the wake-up circuit signal and Vcc goes back to 0, which puts the microcontroller 13 in its off state again, until the sensor 11 detects the next event.

As explained above, in order to work properly, the system also needs a battery change detection circuit, made of TR5 and surrounding components. Figure 13 represents an example of the way the electronic device can work. In this example, a pulse is generated on a gate of a transistor due to the charge of a capacitor. But as mentioned before, this is just an example of operating. The pulse may be generated by others techniques known by the person skilled in the art.

## Claims

1. An electronic device (10) comprising:
- a sensor (11) able to detect a predefined event (12);
- a processing digital circuit (13) connected to the sensor (11), the processing digital circuit (13) being in an off state;
- a power source (14) connected to the sensor (11),
- a switch (22) positioned between the power source (14) and the processing digital circuit (13);
- -an event detection device (15) connected to the sensor (11) and configured to activate the switch (22) to connect (102) the processing digital circuit (13) to the power source (14) when the sensor (11) detects (101) the predefined event (12), so as to switch (103) the processing digital circuit (13) from the off state to an on state,
wherein the processing digital circuit (13) is configured to read in the on state a signal (16) from the sensor (11) when the sensor (11) detects the predefined event (12) and the processing digital circuit (13) is configured to operate (104) at least a predetermined task (17) when it reads the signal (16) from the sensor (11), wherein the event detection device (15) is configured to deactivate the switch (22) to disconnect (105) the processing digital circuit (13) from the power source (14) once the at least a predetermined task (17) has been operated,
**characterized in that**
said electronic device (10) further comprises a circuitry change device (18) connected to the event detection device (15) and configured to detect (110) a change within the electronic device (10), send (111) an initiating signal (19) to the event detection device (15), the event detection device (15) being configured to connect (112) the processing digital circuit (13) to the power source (14), so as to switch the processing digital circuit (13) from the off state to the on state, and the processing digital circuit (13) being configured to send (113) a configuration signal to the sensor (11), so as to pair the sensor (11) with the processing digital circuit (13),
wherein the change within the electronic device (10) is a power source (14) change and/or a sensor (11) change and/or a processing digital circuit (13) change.

2. A method for powering on an electronic device (10), the electronic device comprising :
- a sensor (11) able to detect a predefined event (12) and send a signal (16) when the sensor (11) detects the predefined event (12);
- a processing digital circuit (13) connected to the sensor (11), the processing digital circuit (13) being in an off state;
- a power source (14) connected to the sensor (14);
- a switch (22) positioned between the power source (14) and the processing digital circuit (13);
- an event detection device (15) connected to the sensor (11), the method comprising the steps of :
- detecting (101) the predefined event (12) by the sensor (11);
- activation of the switch (22) to connect (102) the processing digital circuit (13) to the power source (14) by the event detection device (15), so as to switch the processing digital circuit (13) from the off state to an on state;
- reading (103) the signal (16) from the sensor (11) by the processing digital circuit (13);
- operating (104) at least a predetermined task (17) by the processing digital circuit (13);
- deactivation of the switch (22) to disconnect (105) the processing digital circuit (13) from the power source (14) by the event detection device (15) once the at least a predetermined task (17) has been operated,
**characterized in that**
the method comprises a step (100) of configuring the sensor (11) before the step (101) of detecting the predefined event (12) by the sensor (11), the electronic device (10) further comprises a circuitry change device (18) connected to the event detection device (15) and configured to detect a change within the electronic device (10), wherein the step (100) of configuring the sensor (11) comprises the steps of :
- detecting (110) a change within the electronic device (10) by the circuitry change device (18);
- sending (111) an initiating signal (19) to the event detection device (15) from the circuitry change device (18);
- connecting (112) the processing digital circuit (13) to the power source (14) by the event detection device (15), so as to switch the processing digital circuit (13) from the off state to the on state;
- sending (113) a configuration signal from the processing digital circuit (13) to the sensor (11), so as to pair the sensor (11) with the processing digital circuit (13);
- wherein the change within the electronic device (10) is a power source (14) change and/or a sensor (11) change and/or a processing digital circuit (13) change.

3. The method according to claim 2 comprising, before the step (101) of detecting the predefined event (12) by the sensor (11), a step (100) of configuring the sensor (11),

4. The method according to one of claims 2 or 3, wherein the at least a predetermined task (17) is sending an RF frame configured to turn on a light, preferably for a predetermined duration, to trigger an alarm, and/or sending a signal to a device configured to receive and process the signal.

## Patentansprüche

1. Elektronische Vorrichtung (10), die Folgendes umfasst:
- einen Sensor (11), der ein vordefiniertes Ereignis (12) erkennen kann;
- eine mit dem Sensor (11) verbundene digitale Verarbeitungsschaltung (13), wobei die digitale Verarbeitungsschaltung (13) in einem Aus-Zustand ist;
- eine mit dem Sensor (11) verbundene Stromquelle (14),
- einen Schalter (22), der zwischen der Stromquelle (14) und der digitalen Verarbeitungsschaltung (13) positioniert ist;
- eine Ereigniserkennungsvorrichtung (15), die mit dem Sensor (11) verbunden und zum Aktivieren des Schalters (22) konfiguriert ist, um die digitale Verarbeitungsschaltung (13) mit der Stromquelle (14) zu verbinden (102), wenn der Sensor (11) das vordefinierte Ereignis (12) erkennt (101), um die digitale Verarbeitungsschaltung (13) vom Aus-Zustand in einen Ein-Zustand zu schalten (103),
wobei die digitale Verarbeitungsschaltung (13) zum Lesen eines Signals (16) vom Sensor (11) im Ein-Zustand konfiguriert ist, wenn der Sensor (11) das vordefinierte Ereignis (12) erkennt, und die digitale Verarbeitungsschaltung (13) zum Durchführen (104) mindestens einer vorbestimmten Aufgabe (17) konfiguriert ist, wenn sie das Signal (16) vom Sensor (11) liest, wobei die Ereigniserkennungsvorrichtung (15) zum Deaktivieren des Schalters (22) konfiguriert ist, um die digitale Verarbeitungsschaltung (13) von der Stromquelle (14) abzutrennen (105), sobald die mindestens eine vorbestimmte Aufgabe (17) durchgeführt wurde,
**dadurch gekennzeichnet, dass** die elektronische Vorrichtung (10) ferner eine Schaltungsänderungsvorrichtung (18) umfasst, die mit der Ereigniserkennungsvorrichtung (15) verbunden und konfiguriert ist zum Erkennen (110) einer Änderung innerhalb der elektronischen Vorrichtung (10), zum Senden (111) eines Auslösesignals (19) zu der Ereigniserkennungsvorrichtung (15), wobei die Ereigniserkennungsvorrichtung (15) zum Verbinden (112) der digitalen Verarbeitungsschaltung (13) mit der Stromquelle (14) konfiguriert ist, um die digitale Verarbeitungsschaltung (13) vom Aus-Zustand in den Ein-Zustand zu schalten, und wobei die digitale Verarbeitungsschaltung (13) zum Senden (113) eines Konfigurationssignals zum Sensor (11) konfiguriert ist, um den Sensor (11) mit der digitalen Verarbeitungsschaltung (13) zu verpaaren,
wobei die Änderung innerhalb der elektronischen Vorrichtung (10) eine Änderung der Stromquelle (14) und/oder eine Änderung des Sensors (11) und/oder eine Änderung der digitalen Verarbeitungsschaltung (13) ist.

2. Verfahren zum Einschalten einer elektronischen Vorrichtung (10), wobei die elektronische Vorrichtung Folgendes umfasst:
- einen Sensor (11), der ein vordefiniertes Ereignis (12) erkennen und ein Signal (16) senden kann, wenn der Sensor (11) das vordefinierte Ereignis (12) erkennt;
- eine mit dem Sensor (11) verbundene digitale Verarbeitungsschaltung (13), wobei die digitale Verarbeitungsschaltung (13) in einem Aus-Zustand ist;
- eine mit dem Sensor (14) verbundene Stromquelle (14);
- einen Schalter (22), der zwischen der Stromquelle (14) und der digitalen Verarbeitungsschaltung (13) positioniert ist;
- eine mit dem Sensor (11) verbundene Ereigniserkennungsvorrichtung (15), wobei das Verfahren die folgenden Schritte umfasst:
- Erkennen (101) des vordefinierten Ereignisses (12) durch den Sensor (11);
- Aktivieren des Schalters (22) zum Verbinden (102) der digitalen Verarbeitungsschaltung (13) mit der Stromquelle (14) durch die Ereigniserkennungsvorrichtung (15), um die digitale Verarbeitungsschaltung (13) vom Aus-Zustand in einen Ein-Zustand zu schalten;
- Lesen (103) des Signals (16) vom Sensor (11) durch die digitale Verarbeitungsschaltung (13);
- Durchführen (104) mindestens einer vorbestimmten Aufgabe (17) durch die digitale Verarbeitungsschaltung (13);
- Deaktivieren des Schalters (22) zum Abtrennen (105) der digitalen Verarbeitungsschaltung (13) von der Stromquelle (14) durch die Ereigniserkennungsvorrichtung (15), sobald die mindestens eine vorbestimmte Aufgabe (17) durchgeführt wurde,
**dadurch gekennzeichnet, dass** das Verfahren einen Schritt (100) des Konfigurierens des Sensors (11) vor dem Schritt (101) des Erkennens des vordefinierten Ereignisses (12) durch den Sensor (11) umfasst, die elektronische Vorrichtung (10) ferner eine Schaltungsänderungsvorrichtung (18) umfasst, die mit der Ereigniserkennungsvorrichtung (15) verbunden und zum Erkennen einer Änderung innerhalb der elektronischen Vorrichtung (10) konfiguriert ist, wobei der Schritt (100) des Konfigurierens des Sensors (11) die folgenden Schritte umfasst:
- Erkennen (110) einer Änderung innerhalb der elektronischen Vorrichtung (10) durch die Schaltungsänderungsvorrichtung (18);
- Senden (111) eines Auslösesignals (19) zur Ereigniserkennungsvorrichtung (15) von der Schaltungsänderungsvorrichtung (18);
- Verbinden (112) der digitalen Verarbeitungsschaltung (13) mit der Stromquelle (14) durch die Ereigniserkennungsvorrichtung (15), um die digitale Verarbeitungsschaltung (13) vom Aus-Zustand in den Ein-Zustand zu schalten;
- Senden (113) eines Konfigurationssignals von der digitalen Verarbeitungsschaltung (13) zum Sensor (11), um den Sensor (11) mit der digitalen Verarbeitungsschaltung (13) zu verpaaren;
- wobei die Änderung innerhalb der elektronischen Vorrichtung (10) eine Änderung der Stromquelle (14) und/oder eine Änderung des Sensors (11) und/oder eine Änderung der digitalen Verarbeitungsschaltung (13) ist.

3. Verfahren nach Anspruch 2, das vor dem Schritt (101) des Erkennens des vordefinierten Ereignisses (12) durch den Sensor (11) einen Schritt (100) des Konfigurierens des Sensors (11) umfasst.

4. Verfahren nach einem der Ansprüche 2 oder 3, wobei die mindestens eine vorbestimmte Aufgabe (17) das Senden eines HF-Frames ist, der zum Einschalten eines Lichts, vorzugsweise für eine vorbestimmte Dauer, zum Auslösen eines Alarms und/oder zum Senden eines Signals zu einer zum Empfangen und Verarbeiten des Signals konfigurierten Vorrichtung konfiguriert ist.

## Revendications

1. Dispositif électronique (10) comprenant :
- un capteur (11) capable de détecter un évènement prédéfini (12) ;
- un circuit numérique de traitement (13) connecté au capteur (11), le circuit numérique de traitement (13) étant dans un état inactif ;
- une source d'alimentation (14) connectée au capteur (11),
- un commutateur (22) positionné entre la source d'alimentation (14) et le circuit numérique de traitement (13) ;
- un dispositif de détection d'évènement (15) connecté au capteur (11) et configuré pour activer le commutateur (22) pour connecter (102) le circuit numérique de traitement (13) à la source d'alimentation (14) lorsque le capteur (11) détecte (101) l'évènement prédéfini (12), de manière à commuter (103) le circuit numérique de traitement (13) de l'état inactif à un état actif,
dans lequel le circuit numérique de traitement (13) est configuré pour lire dans l'état actif un signal (16) provenant du capteur (11) lorsque le capteur (11) détecte l'évènement prédéfini (12) et le circuit numérique de traitement (13) est configuré pour réaliser (104) au moins une tâche prédéterminée (17) lorsqu'il lit le signal (16) provenant du capteur (11), dans lequel le dispositif de détection d'évènement (15) est configuré pour désactiver le commutateur (22) pour déconnecter (105) le circuit numérique de traitement (13) de la source d'alimentation (14) une fois que l'au moins une tâche prédéterminée (17) a été réalisée,
**caractérisé en ce que** ledit dispositif électronique (10) comprend en outre un dispositif de changement de circuiterie (18) connecté au dispositif de détection d'évènement (15) et configuré pour détecter (110) un changement au sein du dispositif électronique (10), envoyer (111) un signal de déclenchement (19) au dispositif de détection d'évènement (15), le dispositif de détection d'évènement (15) étant configuré pour connecter (112) le circuit numérique de traitement (13) à la source d'alimentation (14), de manière à commuter le circuit numérique de traitement (13) de l'état inactif à l'état actif, et le circuit numérique de traitement (13) étant configuré pour envoyer (113) un signal de configuration au capteur (11) de manière à apparier le capteur (11) au circuit numérique de traitement (13),
dans lequel le changement au sein du dispositif électronique (10) est un changement de source d'alimentation (14) et / ou un changement de capteur (11) et / ou un changement de circuit numérique de traitement (13).

2. Procédé de mise sous tension d'un dispositif électronique (10), le dispositif électronique comprenant :
- un capteur (11) capable de détecter un évènement prédéfini (12) et d'envoyer un signal (16) lorsque le capteur (11) détecte l'évènement prédéfini (12) ;
- un circuit numérique de traitement (13) connecté au capteur (11), le circuit numérique de traitement (13) étant dans un état inactif ;
- une source d'alimentation (14) connectée au capteur (14) ;
- un commutateur (22) positionné entre la source d'alimentation (14) et le circuit numérique de traitement (13) ;
- un dispositif de détection d'évènement (15) connecté au capteur (11), le procédé comprenant les étapes de/d' :
- détection (101) de l'évènement prédéfini (12) par le capteur (11) ;
- activation du commutateur (22) pour connecter (102) le circuit numérique de traitement (13) à la source d'alimentation (14) par le dispositif de détection d'évènement (15), de manière à commuter le circuit numérique de traitement (13) de l'état inactif à un état actif ;
- lecture (103) du signal (16) provenant du capteur (11) par le circuit numérique de traitement (13) ;
- réalisation (104) d'au moins une tâche prédéterminée (17) par le circuit numérique de traitement (13) ;
- désactivation du commutateur (22) pour déconnecter (105) le circuit numérique de traitement (13) de la source d'alimentation (14) par le dispositif de détection d'évènement (15) une fois que l'au moins une tâche prédéterminée (17) a été réalisée,
**caractérisé en ce que** le procédé comprend une étape (100) de configuration du capteur (11) avant l'étape (101) de détection de l'évènement prédéfini (12) par le capteur (11), le dispositif électronique (10) comprend en outre un dispositif de changement de circuiterie (18) connecté au dispositif de détection d'évènement (15) et configuré pour détecter un changement au sein du dispositif électronique (10), dans lequel l'étape (100) de configuration du capteur (11) comprend les étapes de/d' :
- détection (110) d'un changement au sein du dispositif électronique (10) par le dispositif de changement de circuiterie (18) ;
- envoi (111) d'un signal de déclenchement (19) au dispositif de détection d'événement (15) depuis le dispositif de changement de circuiterie (18) ;
- connexion (112) du circuit numérique de traitement (13) à la source d'alimentation (14) par le dispositif de détection d'évènement (15), de manière à commuter le circuit numérique de traitement (13) de l'état inactif à l'état actif ;
- envoi (113) d'un signal de configuration provenant du circuit numérique de traitement (13) au capteur (11) de manière à apparier le capteur (11) au circuit numérique de traitement (13) ;
- dans lequel le changement au sein du dispositif électronique (10) est un changement de source d'alimentation (14) et / ou un changement de capteur (11) et / ou un changement de circuit numérique de traitement (13).

3. Procédé selon la revendication 2 comprenant, avant l'étape (101) de détection de l'évènement prédéfini (12) par le capteur (11), une étape (100) de configuration du capteur (11).

4. Procédé selon l'une des revendications 2 ou 3, dans lequel l'au moins une tâche prédéterminée (17) consiste à envoyer une trame RF configurée pour allumer une lumière, de préférence pour une durée prédéterminée, pour déclencher une alarme, et / ou envoyer un signal à un dispositif configuré pour recevoir et traiter le signal.
